## Europäisches Patentamt
## European Patent Office
## Office européen des brevets

(19)

(11) Numéro de publication: **0 062 564**
**B1**

(12)

# FASCICULE DE BREVET EUROPEEN

(45) Date de publication du fascicule du brevet:
04.09.85

(51) Int. Cl.⁴: **B 64 C 25/34**

(21) Numéro de dépôt: **82400531.8**

(22) Date de dépôt: **24.03.82**

(54) Train d'atterrissage dit à tandem.

(30) Priorité: **08.04.81 FR 8107025**

(43) Date de publication de la demande:
**13.10.82 Bulletin 82/41**

(45) Mention de la délivrance du brevet:
**04.09.85 Bulletin 85/36**

(84) Etats contractants désignés:
**DE GB IT**

(56) Documents cités:
**FR - A - 1 465 428**
**GB - A - 877 505**
**GB - A - 878 385**

(73) Titulaire: **MESSIER-HISPANO-BUGATTI (S.A), 5, rue
Louis Lejeune, F-92120 Montrouge (FR)**

(72) Inventeur: **Turiot, André, 77 Ave de l'Escadrille
Normandie-Niemen, F-91390 Morsang S/Orge (FR)**
Inventeur: **Derrien, Michel, 14bis rue du Parc de Clagny,
F-78000 Versailles (FR)**

(74) Mandataire: **Chevallier, Robert Marie Georges, Société
SEDIC 40, rue Victor Basch, F-92120 Montrouge (FR)**

ACTORUM AG

## Description

La présente invention concerne les trains d'atterrissage rétractables, et plus particulièrement ceux qui sont dits du type train de fuselage avec un ensemble de roues montées en tandem.

On connait des modes de réalisation de ces trains, comme par example celui qui est décrit dans la demande GB-A-878 385 et qui correspond au préambule de la revendication 1. Ceux-ci sont généralement installés sur des avions ou aéronefs qui sont destinés à réaliser de très petits parcours, et qui sont dénommés couramment sous le nom de «commuter».

Ils donnent tous de bons résultats, mais aucun ne répond à la fois aux critères de solidité, fiabilité, minimum d'encombrement, et simplicité de réalisation, tout en assurant le passage d'une position train relevé à train sorti sans grande difficulté.

La présente invention a notamment pour but de pallier ce manque et de réaliser un train principal dit de fuselage monté en tandem, ayant une conception simple tout en présentant néanmoins une bonne fiabilité et une bonne solidité tout en gardant malgré tout la sécurité voulue et notamment dans les passages du train rentré au train sorti. Plus précisément, la présente invention a pour objet un train d'atterrissage relevable pouvant prendre deux positions train relevé et train sorti du type dit de fuselage à roues montées en tandem pour un aéronef ayant une structure rigide comportant deux jambes sensiblement identiques comprenant chacune un balancier et un panneau liés par un amortisseur, chacun des deux balanciers et panneaux étant aptes à pivoter respectivement autour de deux axes solidaires de ladite structure rigide, une barre reliant autour des deux axes rotatifs le premier et le deuxième panneaux pour former entre cette dite barre, les deux dits panneaux, les deux axes solidaires de la structure rigide, les deux axes rotatifs un parallèlogramme déformable caractérisé par le fait qu'il comporte une contre-fiche «brisable» en au moins deux leviers rotatifs autour d'un même premier axe, les extrémités non liées des deux leviers au premier axe étant montées rotatives respectivement autour d'un second axe solidaire du deuxième panneau à proximité sensiblement de l'axe solidaire de ladite structure rigide autour duquel il est monté rotatif, et d'un troisième axe solidaire de la jambe correspondante (1) sur le premier panneau de façon que la droite passant sensiblement par cedit troisième axe et le second forme une diagonale dudit parallélogramme, la différence des longueurs des deux leviers étant sensiblement supérieure à la valeur de cette diagonale quand ledit train est en position train sorti de façon que les deux leviers soient légèrement désalignés.

Selon une autre caractéristique de la présente invention, ladite contre-fiche comporte des moyens de blocage quand les deux dits leviers sont légèrement désalignés.

Selon une autre caractéristique de la présente invention, les moyens de blocage comprennent deux biellettes montées par une de leurs extrémités rotatives autour d'un quatrième axe de rotation, leurs autres extrémités étant montées rotatives respectivement sur deux cinquième et sixième axes de rotation solidaires respectivement des deux pattes solidaires respectivement des deux leviers. Selon une autre caractéristique de la présente invention, la longueur totale des deux biellettes est légèrement supérieure à la distance séparant les cinquième et sixième axes quand les deux leviers sont sensiblement alignés.

Selon une autre caractéristique de la présente invention le train comprend des moyens pour exercer une force élastique sur les deux dites biellettes.

Selon une autre caractéristique de la présente invention l'une des deux dites pattes est située à proximité dudit premier axe.

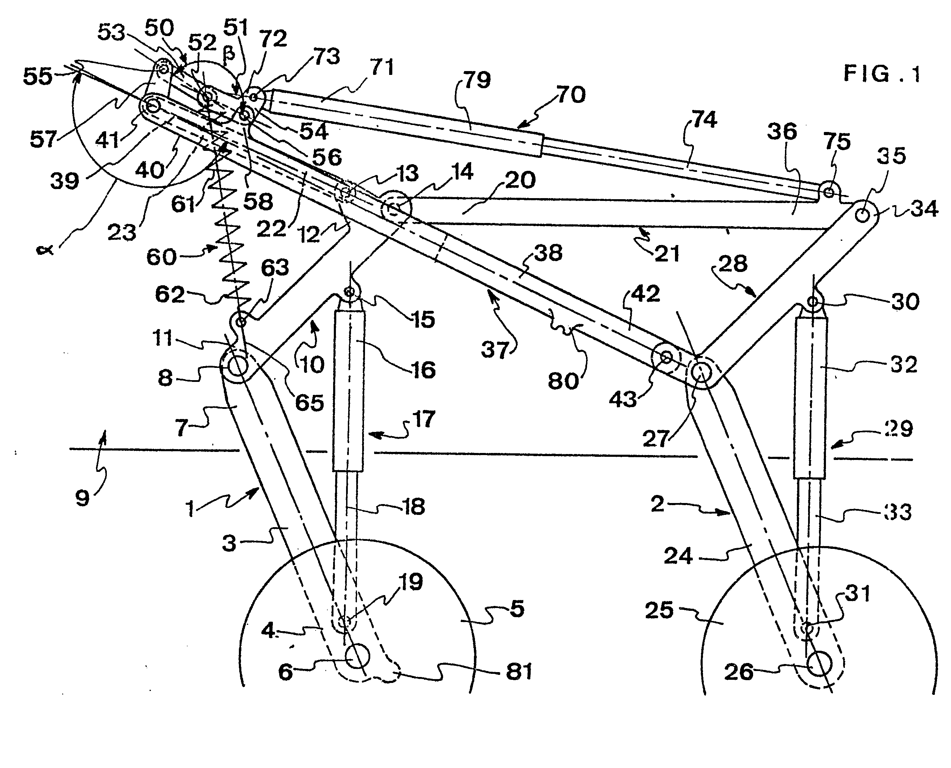

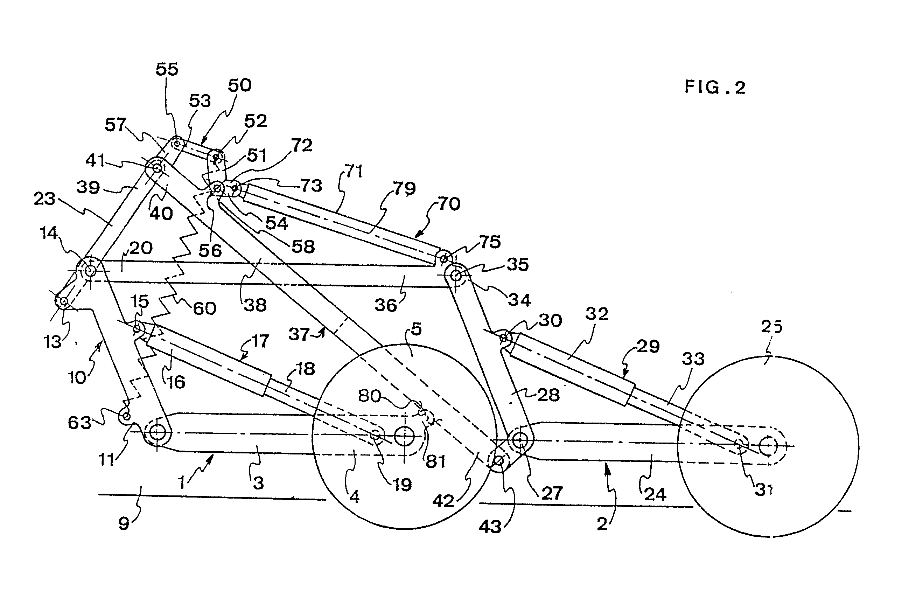

D'autres caractéristiques et avantages de la présente invention apparaîtront au cours de la description suivante, donnée en regard des dessins annexés à titre illustratif, mais nullement limitatif, dans lesquels les figures 1 et 2 représentent en vue de côté un mode de réalisation d'un train d'atterrissage relevable respectivement dans une position train sorti et train rentré.

En se référant indifféremment à l'une ou l'autre des figures, dans lesquelles les mêmes références représentent les mêmes éléments, le train comprend essentiellement deux jambes 1 et 2.

La jambe 1 comprend un balancier 3 dont une extrémité 4 supporte un moyen de roulement comme une roue 5 montée sur un essieu.

L'autre extrémité 7 du balancier 3 est montée rotative sur un axe 8 solidaire d'un chassis rigide d'un aéronef 9. La jambe 1 comprend en outre, un premier panneau 10 dont une extrémité 11 est aussi montée rotative sur l'axe 8. L'autre extrémité 12 comporte un certain nombre d'axes 13, 14, 15 autour desquels s'articulent différentes pièces. Autour de l'axe 15 est accrochée l'extrémité 16, en l'occurrence, le cylindre d'un amortisseur 17 dont la tige 18 est montée rotative sur un axe 19 de l'extrémité 4 du balancier 3. L'axe 14 supporte l'extrémité 20, d'une barre 21, tandis que l'axe 13 supporte l'extrémité 22 d'un levier 23.

La jambe 2 est constituée sensiblement de la même façon que la jambe 1 et comprend un balancier 24 supportant une roue 25 montée sur son essieu 26. Le balancier 24 est monté rotatif sur un axe 27 solidaire du chassis 9. Cet axe 27 supporte un deuxième panneau 28. Ce panneau 28 est relié au balancier 24 par un amortisseur 29 entre les deux axes 30 et 31 supportant respectivement le cylindre 32 et la tige 33 de l'amortisseur 29. L'extrémité 34 du panneau 28 comporte un axe 35 autour duquel est montée rotative l'extrémité 36 de la barre 21 précédemment mentionnée. Les distances séparant les axes 8 et 14 d'une part, et les axes 27 et 35 d'autre part, sont égales. De plus la longueur de la barre 21 prise entre les axes 14 et 35 est égale à la distance séparant les axes 8 et 27. Ces conditions font que les deux panneaux 10 et 28 forment avec la barre 21 un parallélogramme déformable quand les deux panneaux pivotent respectivement autour des axes 8 et 27.

Le train comporte en outre, une contre-fiche 37 formée d'un premier levier 38 et d'un deuxième levier précédemment mentionné 23. Ces deux leviers sont montés, à une de leurs extrémités 39 et 40 rotatifs autour d'un même premier axe 41, tandis que l'autre extrémité 42 du levier 38 est montée rotative autour d'un axe 43 situé sur le panneau 28, sensiblement à proximité de l'axe 27. Comme précédemment mentionné, l'extrémité 22 du levier 23 est montée pivotante autour de l'axe 13 qui est avantageusement situé à proximité de l'axe 14 supportant la barre 21.

Les axes 13 et 43 sont situés sensiblement, respectivement, à proximité des axes 14 et 27, pour que la droite passant par ces deux axes 13 et 43 constitue une diagonale du parallélogramme. De plus, la longueur des deux leviers 38 et 23 est déterminée pour que, lorsque le train est en position sortie comme représenté sur la figure 1, ces deux leviers soient sensiblement alignés et puissent même former un léger angle.

Dans ce cas, la différence des longueurs des deux leviers est sensiblement supérieure à la longueur de la diagonale du parallélogramme déformable quand le train est en position sortie comme figure 1. Avantageusement, le train comporte des moyens de verrouillage des deux leviers 38 et 23 quand ils sont dans la position sensiblement alignés (Fig. 1). Ces moyens sont constitués essentiellement par deux biellettes 50 et 51 montées rotatives l'une par rapport à l'autre à une de leurs extrémités autour d'un axe 52. Les autres extrémités 53 et 54 sont montées rotatives autour respectivement de deux axes 55 et 56 respectivement de deux pattes 57 et 58, la patte 57 étant solidaire de l'extrémité 40 du levier 38 à une certaine distance déterminée de l'axe 41. Cette distance, et plus particulièrement, la longueur des deux biellettes 50 et 51 est déterminée de façon que les deux biellettes forment un certain angle, quand les deux leviers 23 et 38 sont «alignés» (Fig. 1), très proche d'un angle plat.

Plus précisément, comme il a été mentionné précédemment, les deux leviers 23 et 38 forment un certain angle voisin d'un angle plat quand le train est en position sortie (Fig. 1) et de même les deux biellettes 50 et 51, ces deux angles étant sensiblement en opposition de façon que leurs concavités soient dans des directions opposées comme représenté respectivement en α et β sur la figure 1.

Avantageusement, le train comporte un moyen pour exercer une force de rappel sur les deux biellettes, de manière à maintenir celles-ci dans la position définissant l'angle β. Ce moyen est avantageusement constitué par un ressort de traction 60 dont une extrémité 61 est accrochée sur l'axe 52, ou au voisinage de celui-ci, et dont l'autre extrémité 62 est accrochée sur le panneau 10 en un point 63 avantageusement le plus éloigné de l'axe 27, c'est-à-dire à proximité de l'axe 8.

Enfin, le train comporte des moyens pour le faire passer d'une position train sorti selon la figure 1 à la position train rentré selon la figure 2. Avantageusement, ce moyen est constitué d'un vérin de commande 70 dont une extrémité 71, en l'occurrence le cylindre 71, est fixée rotative sur un axe 73 situé sur une partie en saillie 72 de l'extrémité 54 de la biellette 51; l'autre extrémité du vérin 70, en l'occurrence la tige 74, est fixée à proximité de l'axe 35, ou plus précisément de l'extrémité 34 du panneau 28, par exemple sur un axe de rotation 75 solidaire de l'extrémité 36 de la barre 21.

Le fonctionnement du train quand il est en position sortie et que l'avion atterrit et roule est le suivant:

Dans cette position, le train est tel qu'illustré sur la figure 1. La contre-fiche 37 et les moyens de blocage sont dans une position qui empêche toute déformation du parallélogramme. En effet, les deux angles α et β en opposition empêchent toute «brisure» de la contre-fiche et des moyens de verrouillage auxquels s'ajoutent l'action du vérin 70 détendu et celle du ressort de traction 60 qui favorise le maintien de l'angle β. De ce fait, le parallélogramme étant indéformable, les deux panneaux 10 et 28 sont fixes par rapport au chassis 9 de l'avion et ne peuvent subir de rotation autour des axes 8 et 27. Quand les roues 5 et 25 rencontrent des obstacles, aussi bien en creux qu'en relief, les deux balanciers 3 et 24 subissent des rotations dextrorsum et senestrorsum respectivement autour des axes 8 et 27, ces rotations étant amorties respectivement par les amortisseurs 17 et 29, comme il est bien connu.

Le fonctionnement du train quand il passe de la position train sorti (Fig. 1) à la position train rentré (Fig. 2) et réciproquement, est le suivant:

Pour faire passer le train de la position sortie à la position rentrée, on commande le vérin 70 pour obtenir son raccourcissement. Ceci crée deux forces antagonistes dont l'une à l'extrémité 74 entraîne la rotation du panneau 28 dans le sens senestrorsum et dont l'autre extrémité 71 entraîne la rotation dextrorsum de la biellette 51, à l'encontre de la traction du ressort 60. Cette dernière rotation brise le quasi-alignement des deux biellettes 50, 51 et fait pivoter plus précisément la biellette 50 dans un sens senestrorsum. Les rotations des deux biellettes 50 et 51 contribuent à rapprocher les deux axes 55 et 56, entraînant une rotation dextrorsum du levier 23 par sa patte 57. Comme l'axe 41 se soulève, la rotation du levier 23, favorisée par la déformation du parallélogramme et plus particulièrement par la force exercée sur l'axe 75 par le vérin 70, fait que les deux panneaux 10 et 28 pivotent tous les deux dans un sens senestrorsum, et entraînent dans la même rotation les deux balanciers 3 et 24 qui sont liés aux deux panneaux par, respectivement, les deux amortisseurs 17 et 29 qui se sont détendus, dans une certaine limite.

Le train est complètement relevé quand le vérin a parcouru toute sa course qui est, bien entendu, prédéterminée pour obtenir un relevage correct.

La descente du train, c'est-à-dire, le passage de la position rentrée à la position sortie s'effectue en commandant le vérin 70 pour obtenir son allongement. A cette condition, les biellettes, leviers, panneaux et balanciers subissent des rotations dans le sens inverse de celles décrites ci-dessus, et ce, jusqu'à ce que toutes les pièces du train reprennent leur position comme celle illustrée figure 1.

Le train décrit ci-dessus présente toutes les sécurités voulues et notamment celles qui l'empêchent de se rétracter quand il est en position sortie du fait du léger désalignement en opposition respectivement des leviers 23, 38 et des biellettes 50, 51. Avantageusement, pour éviter que le train, quand il est en position rentrée, ne descende de façon impromptue, il comprend un boîtier d'accrochage 80, schématiquement représenté, solidaire du levier 38, apte à coopérer avec un crochet 81 solidaire de l'extrémité 4 du balancier 3. Ce boîtier d'accrochage 80 peut être commandé automatiquement et/ou manuellement.

La structure du train qui est décrite ci-dessus, outre les avantages déjà mentionnés, présente celui de pouvoir passer de la position rentrée à la position sortie même quand, par exemple, le générateur de fluide hydraulique est en panne et ne peut commander le vérin 70.

En effet, le train peut passer de la position rentrée (Fig. 2) à la position sortie (Fig. 1) de lui-même. Il suffit pour cela, manuellement, de commander le boîtier d'accrochage, de façon à libérer le crochet 81, sous l'effet du poids, essentiellement des balanciers et des roues, les deux panneaux 10 et 28 pivotant simultanément grâce au parallélogramme déformable et arrivent à prendre leurs positions définitives, ainsi que les leviers 23, 38 et les biellettes 50, 51 aidés en cela par l'action du ressort 60 qui permet d'obtenir pour les leviers et biellettes, leurs positions angulaires respectives α et β.

En effet, on constate que le moment exercé par le ressort par rapport à l'axe 27 est très important du fait de son bras de levier défini par la distance de l'axe 27 à la direction 65 du ressort. Ce moment est beaucoup plus important que le moment résistant le plus important qui est celui du vérin 70 parce que son bras de levier est faible car il est déterminé par la distance de l'axe 27 à la direction 79 du vérin 70.

De plus, afin qu'il n'y ait point d'ambiguïté dans la compréhension des deux figures, il est précisé que, d'un point de vue structurel, les plans des deux balanciers 3 et 24 forment un certain angle avec ceux des panneaux 10 et 28 et que, en fait, la représentation de ces balanciers n'est que leur projection sur un plan fictif défini par le plan des panneaux. Ceci permet, à la roue 5 lorsqu'elle se relève, de passer devant le levier 38 sans être gênée. De même, le levier 38 est constitué d'une pièce en U dont l'évidement contient le levier 23 et l'extrémité 12 du panneau 10. Cet évidement permet aussi le passage de la barre 21 lorsque le train se relève.

**Revendications**

1. Train d'atterrissage relevable pour prendre deux positions «train rentré» et «train sorti» du type de fuselage à roues montées en tandem pour aéronef ayant une structure rigide comportant deux jambes (1, 2) sensiblement identiques comprenant chacune un balancier (3, 24) et un panneau (10, 28) liés par un amortisseur (17, 29) chaque balancier et panneau étant apte à pivoter respectivement autour de deux axes (8, 27) solidaires de ladite structure rigide (9), une barre (21) reliant autour de deux axes rotatifs (14, 35) le premier et le deuxième panneau (10, 28) pour former entre cette dite barre (21), les deux panneaux (10, 28), les deux axes (8, 27) solidaires de la structure rigide (9), les deux axes rotatifs (14, 25) un parallélogramme déformable caractérisé par le fait qu'il comporte une contre-fiche (37) «brisable» en au moins deux leviers (23, 38) rotatifs autour d'un même premier axe (41), les extrémités (22, 42) des deux leviers non liées au premier axe (41) étant montées rotatives respectivement autour d'un second axe (43) solidaire d'un deuxième panneau (28) à proximité sensiblement de l'axe (27) solidaire de ladite structure rigide (9) autour duquel il est monté rotatif et d'un troisième axe (13) solidaire de la correspondante jambe (1) sur le premier panneau (10) de façon que la portion de droite passant par sensiblement cedit troisième axe (13) et le second axe (43) forment une diagonale dudit parallélogramme, la différence des longueurs des deux leviers (23, 38) étant sensiblement supérieure à la valeur de cette diagonale quand ledit train est en position train sorti (Fig. 1) de façon que les deux leviers (23, 38) soient légèrement désalignés.

2. Train selon la revendication 1 caractérisé par le fait qu'il comporte des moyens de blocage de ladite contre-fiche (37) dans sa position légèrement désalignée.

3. Train selon la revendication 2 caractérisé par le fait que lesdits moyens de blocage comprennent deux biellettes (50, 51) montées par une de leur extrémité rotative autour d'un quatrième axe (52) de rotation, leurs autres extrémités (53, 54) étant montées rotatives respectivement autour d'un cinquième (55) et sixième (56) axes de rotation solidaire respectivement de deux pattes (57, 58) solidaires respectivement des deux leviers (23, 38).

4. Train selon la revendication 3 caractérisé par le fait que la longueur totale additionnée des deux biellettes (50, 51) est légèrement supérieure à la distance séparant les cinquième (55) et sixième (56) axes quand les deux leviers (23, 38) sont légèrement désalignés dans la position «train sorti».

5. Train selon la revendication 4 caractérisé par le fait qu'il comporte des moyens pour exercer une force élastique sur les deux dites biellettes (50, 51).

6. Train selon la revendication 5 caractérisé par le fait que lesdits moyens pour exercer une force sont constitués par un ressort de traction dont une extrémité est reliée à au moins une des deux dites biellettes (50, 51) entre les deux dits cinquième (55) et sixième (56) axes, et dont l'autre extrémité est reliée au panneau sur lequel est fixé le levier (23) le plus court des deux leviers (23, 38), à proximité de l'axe de rotation solidaire dudit chassis fixe (9).

7. Train selon l'une des revendications 3 à 6 caractérisé par le fait que l'une (57) des deux dites pattes (57, 58) est située à proximité dudit premier axe (41).

8. Train selon l'une des revendications 3 à 7 caractérisé par le fait qu'il comporte des moyens commandables pour exercer deux forces de rotation respectivement sur au moins une des deux biellettes (50, 51) et sur un des deux dits panneaux (28).

9. Train selon la revendication 8 caractérisé par le fait que lesdits moyens commandables comportent un vérin (70) dont l'extrémité est montée rotative sur une partie en saillie (72) solidaire d'une biellette (51) et l'autre dudit panneau (28) le plus éloigné de ladite biellette, la biellette (51) étant choisie pour obtenir une rotation voulue.

10. Train selon l'une des revendications précédentes caractérisé par le fait qu'il comporte un boîtier d'accrochage (80) solidaire du levier (38) le plus long des deux apte à coopérer avec un crochet (81) solidaire d'un des deux balanciers (3).

## Patentansprüche

1. Einziehbares Fahrwerk für zwei Positionen «Fahrwerk eingezogen» und «Fahrwerk ausgefahren» der Bauart eines Rumpfes mit im Tandem angeordneten Rädern für ein Luftfahrzeug mit einem starren Aufbau, umfassend zwei im wesentlichen identische Beine (1, 2), die jeweils einen Lenker (3, 24) und eine Platte (10, 28) umfassen, verbunden durch einen Dämpfer (17, 29), wobei jeder Lenker und jede Platte um zwei Achsen (8, 27) schwenkbar sind, die an dem starren Aufbau (9) festgelegt sind, wobei eine Stange (21) um zwei drehbare Achsen (14, 35) die erste und die zweite Platte (10, 28) verbindet zur Ausbildung eines deformierbaren Parallelogramms zwischen dieser besagten Stange (21), den beiden Platten (10, 28), den beiden Achsen (8, 27), die mit der starren Struktur (9) verbunden sind, den beiden drehbaren Achsen (14, 25), dadurch gekennzeichnet, dass es eine «knickbare» Gegenstütze (37) aus mindestens zwei Hebeln (23, 38) umfasst, die um ein und dieselbe erste Achse (41) drehbar sind, wobei die Enden (22, 42) der beiden Hebel, die nicht mit der ersten Achse (41) verbunden sind, drehbeweglich montiert sind, jeweils um eine zweite Achse (42), verbunden mit der ersten Platte (28) in grosser Nähe zur Achse (27), die mit der genannten starren Struktur (9) verbunden ist, um die sie drehbar ist bzw. eine dritte Achse (13), verbunden mit dem entsprechenden Bein (1) auf der ersten Platte (10) derart, dass der Abschnitt der Geraden, die im wesentlichen durch diese genannte dritte Achse und die zweite Achse (43) verläuft, eine Diagonale des besagten Parallelogramms bildet, wobei die Differenz der Längen der beiden Hebel (23, 38) deutlich grösser ist als der Wert dieser Diagonalen, wenn das besagte Fahrwerk in ausgefahrener Position ist (Fig. 1), derart, dass die beiden Hebel (23, 38) geringfügig fehlausgefluchtet sind.

2. Fahrwerk nach Anspruch 1, dadurch gekennzeichnet, dass es Mittel zum Blockieren der besagten Gegenstütze (37) in ihrer geringfügig fehlausgefluchteten Position aufweist.

3. Fahrwerk nach Anspruch 2, dadurch gekennzeichnet, dass die genannten Blockiermittel zwei Lenker (50, 51) umfassen, die mit ihrem einen Ende drehbeweglich um eine vierte Drehachse (52) angeordnet sind, während ihre anderen Enden (53, 54) drehbeweglich um eine fünfte (55) bzw. sechste (56) Drehachse montiert sind, jeweils verbunden mit zwei Ohren (57, 58) an den beiden Hebeln (23, 38).

4. Fahrwerk nach Anspruch 3, dadurch gekennzeichnet, dass die gesamte aufaddierte Länge der beiden Lenker (50, 51) geringfügig grösser ist als der Abstand zwischen der fünften (55) und der sechsten (56) Achse, wenn die beiden Hebel (23, 38) geringfügig fehlausgefluchtet sind in der ausgefahrenen Position des Fahrwerks.

5. Fahrwerk nach Anspruch 4, dadurch gekennzeichnet, dass es Mittel zum Ausüben einer elastischen Kraft auf die beiden genannten Lenker (50, 51) umfasst.

6. Fahrwerk nach Anspruch 5, dadurch gekennzeichnet, dass die genannten Mittel zum Ausüben einer Kraft von einer Zugfeder gebildet sind, deren eines Ende mit mindestens einem der genannten Lenker (50, 51) verbunden ist zwischen den beiden genannten fünften bzw. sechsten Achsen und deren anderes Ende mit der Platte verbunden ist, an der der kürzere (23) der beiden Hebel (23, 38) befestigt ist, nahe der Drehachse, die mit dem genannten festen Chassis (9) verbunden ist.

7. Fahrwerk nach einem der Ansprüche 3 bis 6, dadurch gekennzeichnet, dass eines (57) der beiden genannten Ohren (57, 58) nahe der genannten ersten Achse (41) angeordnet ist.

8. Fahrwerk nach einem der Ansprüche 3 bis 7, dadurch gekennzeichnet, dass es steuerbare Mittel aufweist zum Ausüben zweier Drehkräfte, jeweils auf mindestens einen der beiden Lenker (50, 51) und eine der beiden genannten Platten (28).

9. Fahrwerk nach Anspruch 8, dadurch gekennzeichnet, dass die genannten steuerbaren Mittel einen Arbeitszylinder (70) umfassen, dessen Ende drehbeweglich an einem vorspringenden Abschnitt (72) montiert ist, der verbunden ist mit einem Lenker (51), und dass andere mit der genannten Platte (28), die am weitesten von dem genannten Lenker entfernt ist, wobei der Lenker (51) ausgewählt ist zum Erzielen einer gewünschten Drehung.

10. Fahrwerk nach einem der vorangehenden Ansprüche, dadurch gekennzeichnet, dass es ein Verankerungsgehäuse (80) umfasst, verbunden mit dem längeren (38) der beiden Hebel und ausgebildet zum Zusammenwirken mit einem Anker (81), verbunden mit einem der beiden Lenker (3).

## Claims

1. A fuselage type raisable landing gear for taking up two positions: a "retracted" position and an "extended" position; on an aircraft having a rigid structure, the landing gear having wheels mounted in tandem and comprising two substantially identical legs (1, 2) each comprising a rocking lever (3, 24) and a panel (10, 28) linked by a shock-absorber (17, 29), with each rocker lever and panel being suitable for pivoting respectively about two axes (8, 27) which are fixed to the said rigid structure (9), a bar (21) interconnecting the first and second panels (10, 28) via two rotary axes (14, 35) thereby constituting a deformable parallelogram between said bar (21), the two panels (10, 28), the two axes (8, 27) which are fixed to the rigid structure (9), and the two rotary axes (14, 35), the landing gear being characterized by the fact that it comprises a "collapsible" brace (37) including at least two levers (23, 38) which are rotatable about a common first axis (41), the ends (22, 42) of the two levers which are not connected to the first axis (41) being rotatably mounted respectively about a second axis (43) fixed to a second panel (28) in substantial proximity to the axis (27) which is fixed to the said rigid structure (9) about which it is rotatably mounted, and about a third axis (13) fixed to the corresponding leg (1) on the first panel (10) in such a manner that the straight line portion passing substantially through said third axis (13) and the second axis (43) forms a diagonal of the said parallelogram, the difference in lengths of the two levers (23, 38) being substantially greater than the length of the said diagonal when the landing gear is in the extended position (Figure 1) so that the two levers are slightly misaligned.

2. Landing gear according to claim 1, characterized by the fact that it includes means for locking the said brace (37) in its slightly misaligned position.

3. Landing gear according to claim 2, characterized by the fact that the said locking means include two links (50, 51) having one end rotatably mounted about a fourth axis (52) of rotation, their other ends (53, 54) being rotatably mounted respectively about fifth (55) and sixth (56) axes or rotation fixed to respective lugs (57, 58) fixed to respective ones of the two levers (23, 38).

4. Landing gear according to claim 3, characterized by the fact that the total sum length of the two links (50, 51) is slightly greater than the distance between the fifth and the sixth axes (55, 56) when the two levers (23, 38) are slightly misaligned in the "extended" position.

5. Landing gear according to claim 4, characterized by the fact that it includes means for exerting a resilient force on the said links (50, 51).

6. Landing gear according to claim 5, characterized by the fact that the said means for exerting a force are constituted by a traction spring having one end connected to at least one of the two said links (50, 51) between the said fifth and sixth axes (5, 56), and having its other end connected to the panel to which the shorter lever (23) of the two levers (23, 38) is fixed, in the proximity of the axis of rotation fixed to the said fixed chassis (9).

7. Landing gear according to any one of claims 3 to 6, characterized by the fact that one (57) of the two said lugs (57, 58) is situated in the proximity of the said first axis (41).

8. Landing gear according to any one of claims 3 to 7, characterized by the fact that it includes controllable means for exerting two respective forces of rotation on at least one of the two links (50, 51) and on one of the two said panels (28).

9. Landing gear according to claim 8, characterized by the fact that the said controllable means include an actuator (70) having its end mounted rotatably about a projecting portion (72) fixed to one of the links (51) and the other one of the said panel (28) furthest from the said link, the said link (51) being chosen to obtain a desired rotation.

10. Landing gear according to any preceding claim, characterized by the fact that it includes a locating recess (80) fixed to the longer of the two levers (38) and suitable for co-operating with a hook (81) fixed to one of the rocker levers (3).

FIG. 1

FIG.2